# EUROPEAN PATENT APPLICATION

(11) **EP 4 763 342 A1**
(43) Date of publication of application: **24.06.2026**
(21) Application number: 25000121.1
(22) Date of filing: 15.12.2025
(51) Int. Cl.: B04B 7/16, B01D 45/12, B01D 45/14, B01D 46/00, B01D 46/24, B01D 46/78, B04B 7/18

(54) **CENTRIFUGAL FILTER FOR OILY MISTS**

(30) Priority: 17.12.2024 IT 202400028773
(71) Applicant: HFiltration Srl, 20025 Legnano (MI) (IT)
(72) Inventor: Romeo Saverio, Sergio, 20028 San Vittore Olona (MI) (IT)

(57) **Abstract**

A centrifugal filter (10) for oily mists comprising an external cylindrical container (20), an electric motor (5) with a shaft to transmit a rotational movement, a centrifuge (30) comprising an impeller (37) fixed on the shaft of the electric motor (5), an air outlet (6) of the filtered air positioned in proximity of the electric motor (5), an air inlet (3) which is positioned in proximity of a central portion of the impeller (37) for aspirating air containing oily mist to be treated. According to the invention, the centrifugal filter comprises an annular cartridge filter (40) comprising a double-layer filter capable of operating a coalescence filtration at the inlet to the annular cartridge filter (40) and capable of operating an absolute filtration at the outlet from the annular cartridge filter (40), and further comprises a first coalescence filtration layer (41) which defines a first lateral surface and a second absolute filtration layer (45) which defines a second lateral surface, moreover, the first coalescence filtration layer (41) and the second absolute filtration layer (45) face each other and in contact with each other in such a way to be radially in series to perform a double filtration, a coalescence filtration at the inlet and an absolute filtration at the outlet from said annular cartridge filter (40) that are added to a centrifugal filtration operated after the air inlet.

## Description

The present invention relates to a centrifugal filter for oily mists, which exhibits improved properties in the efficiency of separating oil from air.

Moreover, the present invention is related to an oil-air separation process carried out with this centrifugal filter for oily mist.

The field of the invention is that of centrifugal filters, namely equipment suitable for separating oil from mists originating, for example, from machine tool operations.

The need of the oil separation from air is mainly due to environmental pollution and environmental protection reasons.

Centrifugal filters are well-known to consist of a cylindrical container, inside which a centrifuge is mounted rotatably, consisting of a perforated sheet basket and provided, internally, with a plurality of radial blades suitable for generating a depression inside the said basket.

Through the rotation of the latter, the mist is first aspirated inside the basket and, subsequently, the said mist passes through a spongy polymer material with open cells that covers the holes of the sheet that forms the basket.

The combined action of the centrifugal force and the spongy material results in the formation of both coalescing droplets of oil that are deposited on the inside of the cylindrical container, and a stream of purified air that first carries these oil droplets to a respective drainage pipe, and then discharges from the filter outlet.

Traditional centrifugal filters of the type now described have the drawback of releasing an air current that still carries undesirable quantities of oil droplets.

The known centrifugal filters also have the disadvantage of directing the mist to be treated only to specific and limited areas of the internal surface of the centrifuge, with an incomplete effect on the oil-air separation and with only partial utilization of the system.

Object of the present invention is to provide a centrifugal filter for oily mists that allows for a greater separation efficiency and with an additional quantity of oil filtered and drained before the filter outlet itself.

Another object is to provide a centrifugal filter for oily mists that is economically advantageous.

These objectives according to the present invention are achieved by realizing a centrifugal filter for oily mists as claimed in claim 1.

Further features of the invention are highlighted by the subsequent claims.

The features and advantages of a centrifugal filter for oily mists and an oil/air separation process realized with this oily mist centrifugal filter according to the present invention will become more evident from the following description, illustrative and non-limiting, with reference to the schematic drawings attached, in which:

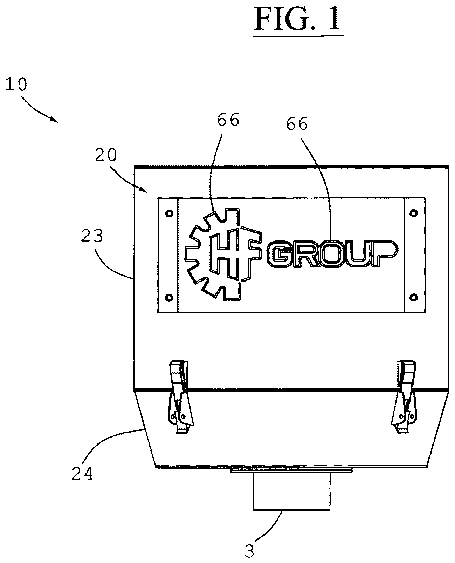

figure 1 is a front elevation view of a preferred form of embodiment of a centrifugal filter for oily mists according to the present invention;

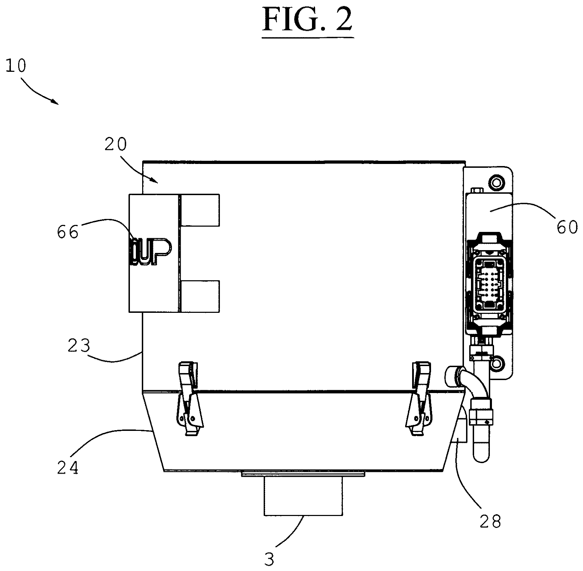

figure 2 is a right-side elevation view of the centrifugal filter of figure 1;

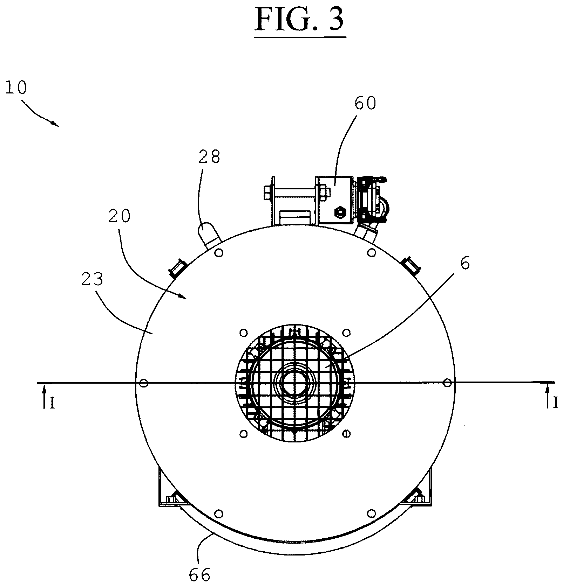

figure 3 is a top view of the centrifugal filter of figure 1;
figure 4 is an elevation frontal section view of the centrifugal filter of figure 3 sectioned along the line I-I, showing the air flow within said centrifugal filter;

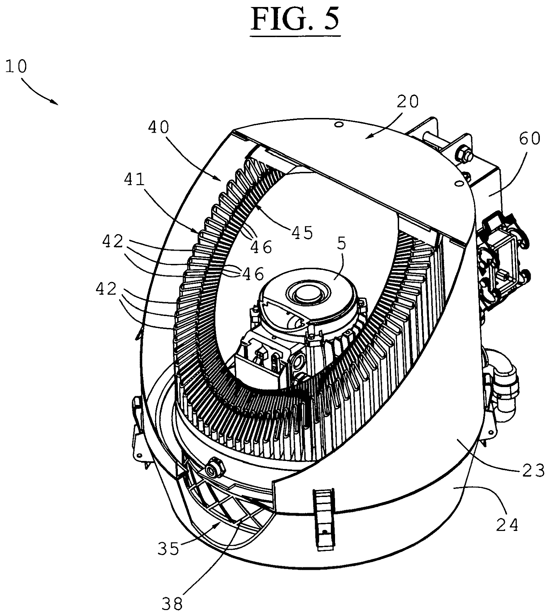

figure 5 is a perspective right-side elevation view, partially sectioned with an oblique plane of the filter of figure 1;

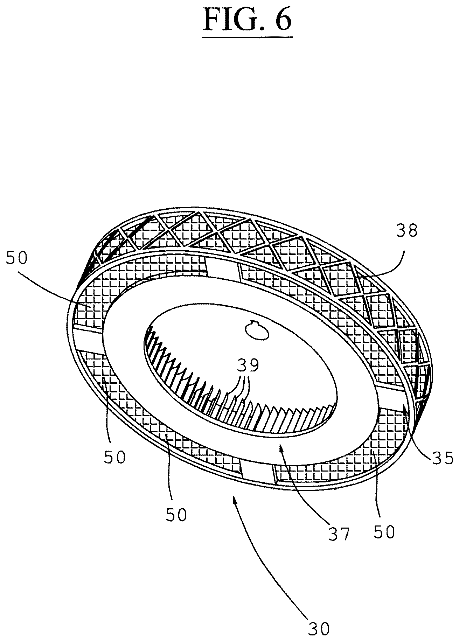

figure 6 is a perspective right-side elevation view of a preferred form of embodiment of a detail of figure 4, showing a sheet metal basket and an impeller with which said filter is preferably equipped;

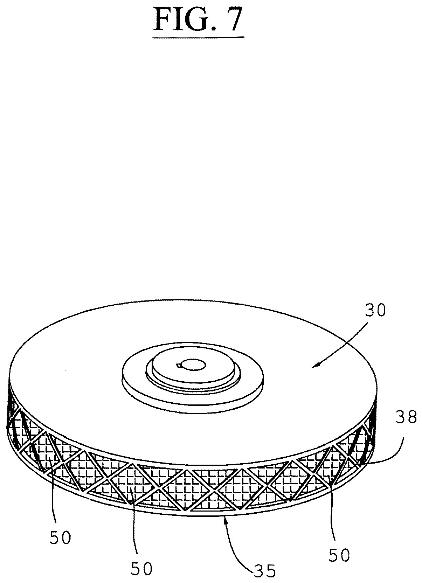

figure 7 is a perspective right-side elevation view of the detail of figure 6.

With reference to the figures, it is shown a centrifugal filter 10 for oily mists comprising an external cylindrical container 20, an electric motor 5 having a shaft to transmit rotational movement, a centrifuge 30 comprising a impeller 37 fixed on said shaft of said electric motor 5, an air outlet opening 6 of the filtered air positioned in proximity of said electric motor 5, an air inlet opening 3 which is positioned in proximity of a central portion of said impeller 37 for aspirating air containing an oily mist to be treated.

According to the present invention, said centrifugal filter 10 comprises an annular cartridge filter 40 comprising a double-layer filter capable of operating a coalescence filtration at the inlet to said annular cartridge filter 40 and capable of operating an absolute filtration at the outlet from said annular cartridge filter 40.

Preferably, said external cylindrical container 20 is preferably composed of a lower part 24 and an upper part 23 which are separable from each other, and said lower part 24 preferably presents a tapered lateral wall towards said inlet opening 3, and within said upper part 23 it is realized said air outlet opening 6 which is preferably equipped with a protective grid, and further said centrifuge 30 is housed within said lower part 24, and besides within said upper part 23 are housed said electric motor 5 and said annular cartridge filter 40, and besides within said lower part 24 it is realized an oil or oil and water emulsion recovery conduit 28 that is separated from said oily mist.

In particular, said annular cartridge filter 40 comprises a first coalescence filtration layer 41 which defines a first lateral surface of said annular cartridge filter 40 itself and a second absolute filtration layer 45 which defines a second lateral surface of said annular cartridge filter 40, besides said first coalescence filtration layer 41 and of said second absolute filtration layer 45 face each other and are in contact with each other in such a way to be radially in series to perform a double filtration, consequently said annular cartridge filter 40 is capable of operating a coalescence filtration at the inlet to said annular cartridge filter 40 and is capable of operating an absolute filtration at the outlet from said annular cartridge filter 40.

This determines a synergy between said first coalescence filtration layer 41 and said second absolute filtration layer 45 because it increases the pressure internally within said centrifugal filter and leads to a greater coalescence of said oily mist.

Preferably, said second absolute filtration layer 45 has a smaller diameter than said first coalescence filtration layer 41 resulting radially more internal, and furthermore said annular cartridge filter 40 is positioned around said electric motor 5.

This advantageously permits the encumbrance of said centrifugal filter 10 to be minimized, combined with the fact that said annular cartridge filter 40 can be fixed in a reversible manner inside said cylindrical external container 20, in particular to an upper part 23 thereof, and surrounds a side surface of said electric motor 5 in such a way that the air coming from said inlet opening 3 is radially filtered through said annular cartridge filter 40 and then exits from said outlet opening 6.

Preferably, said annular cartridge filter 40 includes a first annular upper base and a second annular lower base, not shown, each of which is made integral to the corresponding upper and lower ends of said first coalescence filtration layer 41 and said second absolute filtration layer 45, preferably by means of adhesive bonding.

In particular, said first annular upper base is made integral to an upper end of said first coalescence filtration layer 41 and an upper end of said second absolute filtration layer 45, preferably by means of adhesive bonding, and at the same time, said second annular lower base is made integral to a lower end of said first coalescence filtration layer 41 and a lower end of said second absolute filtration layer 45, preferably by means of adhesive bonding.

Preferably, said first coalescence filtration layer 41 has an annular shape and extends within two concentric circles and includes a plurality of folds 42 in which a plurality of holes, not shown, are formed, which preferably have a tapered and converging shape towards an internal face of said first coalescence filtration layer 41 to increase the coalescence effect of the oil particles.

Preferably, said second absolute filtration layer 45 has an annular shape and extends within two concentric circles and includes a plurality of folds 46 in which a plurality of holes, not shown, are formed.

Preferably, said centrifuge 30 includes a sheet metal basket 35 having an external metal mesh 38, besides said sheet metal basket 35 surrounds said impeller 37 and it is made in a single piece with said impeller 37 which is equipped with a plurality of radial blades 39 each having a horizontally shaped "C" section for conveying an air flow containing said oily mist from said inlet opening 3 radially outward.

Advantageously, this minimizes pressure losses while ensuring uniform radial air flow.

Moreover, preferably said sheet metal basket 35 includes a plurality of filtering panels 50 of open-celled spongy polymeric material which are inserted within said sheet metal basket 35 and are retained by said external metal mesh 38 within said sheet metal basket 35 to receive and filter said air flow containing said oily mist and to cause an aggregation by coalescence of said oily mist.

Preferably said plurality of filtering panels 50 is realized with an open-cell spongy polymeric material which is chosen in particular between a reticulated expanded polyester foam with completely open cells, such for example as that commercially known as Bulpren^{®}, and a reticulated expanded polyurethane foam with completely open cells.

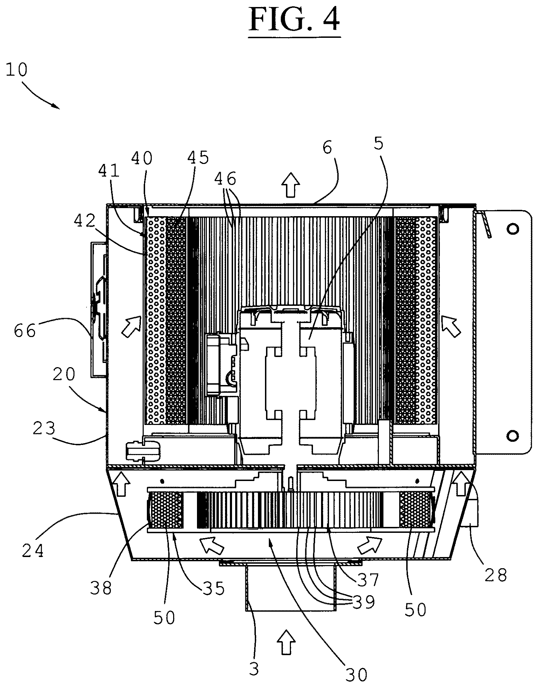

Moreover, preferably said plurality of filtering panels 50 of open-cell spongy polymeric material, with reference to Figure 4, shows a laterally shaped pyramid or wavy surface which faces said impeller 37 to increase the surface that receives a flow of air containing said oily mist.

Preferably said centrifugal filter 10 includes an electronic unit 60, in particular a plc or a microprocessor electronic card, which is equipped with a power supply terminal block and with a data communication card preferably of type gsm and for wireless communications for internet communications, and in addition said electronic unit 60 is externally fixed to said external cylindrical container 20 and includes a pressure sensor, not shown, which is capable of detecting an internal pressure in said external cylindrical container 20 in proximity of said annular cartridge filter 40.

Preferably said pressure sensor is inserted within a conduit not shown which is connected to said external cylindrical container 20, in particular it is connected to said upper part 23, to detect the internal pressure in said external cylindrical container 20 in proximity of said annular cartridge filter 40.

Besides, preferably said centrifugal filter 10 includes a light-emitting element 66 which is externally fixed to said external cylindrical container 20 and which is connected to said electronic unit 60 and it is capable of assuming a plurality of colors such as blue, green, in the case where the pressure detected by said pressure sensor is below a first predetermined value, in which said annular cartridge filter 40 operates correctly, and colors such as red or orange, in the case where the pressure detected by said pressure sensor is equal to or greater than said first predetermined value, in which said annular cartridge filter 40 is clogged and needs to be replaced in particular because the flow rate decreases progressively.

Preferably said electronic unit 60 is capable of monitoring the pressure of said pressure sensor and is capable of emitting and sending a series of alarms through said data communication card also via web through email notifications or mobile phone messages, in particular SMS, to allow remote monitoring of the achievement of a plurality of progressive clogging levels of said annular cartridge filter 40 in order to schedule maintenance or replacement operations.

Preferably said electronic unit 60 is capable of recording the pressure in proximity of said annular cartridge filter 40 over time to determine and monitor the progressive clogging state of the same based on the hours of operation in order to schedule maintenance and/or replacement operations.

Preferably referred to as electronic unit 60, it includes a plurality of additional sensors, such as temperature and/or humidity, and is capable of monitoring the levels of the quantities thereof and is capable of emitting and sending a series of alarms through said data communication card, also via web through email notifications or mobile phone messages, in particular SMS, to enable remote monitoring and scheduling maintenance operations.

According to another aspect of the present invention, an oil/air separation process is provided which is realized using this centrifugal filter for oily mists, which is realized with a centrifugal filter 10 having one or more of the features and forms of realization previously described, in which said process includes a second phase of coalescence filtration and a third phase of absolute filtration, in which said second phase and said third phase are integrated with each other and carried out consecutively with said annular cartridge filter 40 with double filtration.

Preferably, said oil/air separation process includes a first phase of centrifugal filtration by means of said impeller 37, in particular by coalescence, and by means of said plurality of filtering panels 50 made of open-cell spongy polymeric material, and in addition, said first phase is followed by said second phase of coalescence filtration and by said third phase of absolute filtration.

Advantageously, said centrifugal filter 10 and said filtration process allow to perform three phases of filtration, of which two are integrated with each other synergistically, to ensure an effective separation of particles from the air from the oily mist, which is also recovered and reused in a machine tool not shown.

In particular, said first phase of filtration is based on centrifugal force to separate fine oil particles from the air.

The air containing the oily mist is passed through the impeller 37, which induces a vortex motion, generating a centrifugal force that pushes the suspended oil particles towards said plurality of filtering panels 50.

In particular, oil particles of the order of one micron or smaller are thus forced to move within said plurality of filtering panels 50, which act as aggregating surfaces with a progressive increase in the particle size of the oil particles through a coalescence aggregation process, leading to the formation of larger and heavier particles, which progressively transform into liquid droplets that drain along the inner wall of said lower part 24 and are conveyed and collected in particular through said liquid oil recovery conduit 28 and subsequently reused or disposed of.

In particular, said second phase of coalescence filtration is based on the physical principle of coalescence to further remove particles present in the air, in which oil droplets encounter a porous or fibrous surface of said first coalescence filtration layer 41 of said annular cartridge filter 40, to favor the union of these particles into larger entities, in addition, the liquid particles agglomerate further, forming droplets of sufficient size to no longer be carried by the air flow, and finally, these oil liquid droplets are then collected and drained as in said first phase of filtration, in particular through said liquid oil recovery conduit 28.

In particular, said third phase of absolute filtration is capable of filtering particles with sizes equal to or greater than 0.3 microns, allowing particles with sizes less than 0.3 microns to pass through.

It has thus been seen that a centrifugal filter for oily mists and an oil/air separation process realized with this centrifugal oily mist filter according to the present invention achieve the objectives previously highlighted.

The centrifugal filter for oily mists and the oil/air separation process realized with this centrifugal oily mist filter of the present invention, as so conceived, are susceptible of numerous modifications and variants, all falling within the same inventive concept.

Moreover, in practice the materials used and also their sizes and components, may be of any kind depending on the technical requirements.

## Claims

1. A centrifugal filter (10) for oily mists comprising an external cylindrical container (20), an electric motor (5) having a shaft to transmit a rotational movement, a centrifuge (30) comprising an impeller (37) fixed on said shaft of said electric motor (5), an air outlet opening (6) of the filtered air positioned in proximity of said electric motor (5), an air inlet opening (3) which is positioned in proximity of a central portion of said impeller (37) for aspirating air containing an oily mist to be treated, **characterized by** comprising an annular cartridge filter (40) comprising a double-layer filter capable of operating a coalescence filtration at the inlet to said annular cartridge filter (40) and capable of operating an absolute filtration at the outlet from said annular cartridge filter (40).

2. Centrifugal filter (10) according to claim 1, **characterized in that** said annular cartridge filter (40) includes a first coalescence filtration layer (41) which defines a first lateral surface of said annular cartridge filter (40) itself and a second absolute filtration layer (45) which defines a second lateral surface of said annular cartridge filter (40) itself, further said first coalescence filtration layer (41) and said second absolute filtration layer (45) face each other and are in contact with each other in such a way to be radially in series to perform a double filtration, consequently said annular cartridge filter (40) is capable of operating a coalescence filtration at the inlet to said annular cartridge filter (40) and is capable of operating an absolute filtration at the outlet from said annular cartridge filter (40).

3. Centrifugal filter (10) according to claim 2, **characterized in that** said second absolute filtration layer (45) has a smaller diameter than said first coalescence filtration layer (41) resulting radially more internal, and said annular cartridge filter (40) is fixable reversibly internally to said external cylindrical container (20) and surrounds a lateral surface of said electric motor (5) in such a way that the air coming from said air inlet opening (3) is filtered radially through said annular cartridge filter (40) before exiting through said air outlet opening (6).

4. Centrifugal filter (10) according to claim 2 or 3, **characterized in that** said annular cartridge filter (40) includes a first annular upper base and a second annular lower base, each of which is made integral to corresponding upper and lower ends of said first coalescence filtration layer (41) and of said second absolute filtration layer (45), preferably by means of adhesive bonding.

5. Centrifugal filter (10) according to any of claims 2 to 4, **characterized in that** said first coalescence filtration layer (41) has a ring shape and extends within two concentric circles and includes a plurality of folds (42) in which a plurality of holes are formed, which preferably have a tapered and converging shape towards an internal face of said first coalescence filtration layer (41) to increase the coalescence effect of the oily particles, besides said second absolute filtration layer (45) has a ring shape and extends within two concentric circles and includes a plurality of folds (46).

6. Centrifugal filter (10) according to any of claims 1 to 5, **characterized in that** said external cylindrical container (20) is composed of a lower part (24) and an upper part (23) which are separable from each other, further said lower part (24) preferably presents a tapered lateral wall towards said inlet opening (3), and within said lower part (24) it is realized said air inlet opening (3) containing an oily mist to be treated, and further said centrifuge (30) is housed within said lower part (24), further within said upper part (23) is realized said air outlet opening (6) which is preferably equipped with a protective grid, and further said electric motor (5) and said annular cartridge filter (40) are housed within said upper part (23).

7. Centrifugal filter (10) according to any of claims 1 to 6, **characterized in that** said centrifuge (30) includes a sheet metal basket (35) having an external metal mesh (38), further said sheet metal basket (35) surrounds said impeller (37) and it is made in a single piece with said impeller (37) which is equipped with a plurality of radial blades (39) each having a horizontally shaped "C" section for conveying an air flow containing said oily mist outwardly from said inlet opening (3) radially outwards.

8. Centrifugal filter (10) according to claim 7, **characterized in that** said sheet metal basket (35) includes a plurality of filtering panels (50) of open-cell spongy polymeric material which are inserted within said sheet metal basket (35) and which are retained by said external metal mesh (38) within said sheet metal basket (35) to receive and filter said air flow containing said oily mist and to cause an aggregation by coalescence of said oily mist.

9. Centrifugal filter (10) according to claim 8, **characterized in that** said plurality of filtering panels (50) is realized with an open-cell spongy polymeric material which is chosen in particular between a reticulated expanded polyester foam with completely open cells, such for example as that commercially known as Bulpren^{®}, and a reticulated expanded polyurethane foam with completely open cells.

10. Centrifugal filter (10) according to any of claims 1 to 9, **characterized by** comprising an electronic unit (60), in particular a plc or a microprocessor electronic card, which is equipped with a power supply terminal block and with a data communication card preferably of type gsm and for wireless communications, and further said electronic unit (60) is fixed externally to said external cylindrical container (20) and includes a pressure sensor which is capable of detecting an internal pressure within said external cylindrical container (20) in proximity of said annular cartridge filter (40).

11. Centrifugal filter (10) according to claim 10, **characterized in that** said centrifugal filter (10) includes a light-emitting diode (66) which is fixed externally to said external cylindrical container (20) and which is connected to said electronic unit (60) and it is capable of assuming a plurality of colors such as blue, green, in the case where the pressure detected by said pressure sensor is below a first predetermined value, in which said annular cartridge filter (40) operates correctly, and colors such as red or orange, in the case where the pressure detected by said pressure sensor is equal to or greater than said first predetermined value, in which said annular cartridge filter (40) is clogged and needs to be replaced.

12. Centrifugal filter (10) according to claim 10 or 11, **characterized in that** said electronic unit (60) is capable of monitoring the pressure of said pressure sensor and is capable of emitting and sending a series of alarms through said data communication card, also via web through email notifications or mobile phone messages, in particular SMS, to enable remote monitoring of the achievement of a plurality of progressive clogging levels of said annular cartridge filter (40) in order to schedule maintenance or replacement operations thereof.

13. Centrifugal filter (10) according to any of claims 10 to 12, **characterized in that** said electronic unit (60) includes a plurality of additional sensors, such as temperature and/or humidity, and is capable of monitoring the levels of the quantities thereof and is capable of emitting and sending a series of alarms through said data communication card, also via web through email notifications or mobile phone messages, in particular SMS, to enable remote monitoring and schedule maintenance operations.

14. Oil/air separation process realized by a centrifugal filter for oily mists which is realized with a centrifugal filter (10) according to any of claims 1 to 11, in which said process includes a second phase of coalescence filtration and a third phase of absolute filtration, in which said second phase and said third phase are integrated with each other and carried out consecutively with said annular cartridge filter (40) with double filtration.

15. Oil/air separation process according to claim 15, **characterized by** comprising a first phase of centrifugal filtration by means of said impeller (37), in particular by coalescence, and by means of said plurality of filtering panels (50) made of open-cell spongy polymeric material, furthermore, said first phase is followed by said second phase of coalescence filtration and by said third phase of absolute filtration.
